# EUROPEAN PATENT SPECIFICATION

(11) **EP 3 294 455 B1**
(45) Date of publication and mention of the grant of the patent: **12.08.2020**
(21) Application number: 16722572.1
(22) Date of filing: 29.04.2016
(51) Int. Cl.: B01L 9/06, G01N 35/04

(54) **TEST TUBE CARRIER**
REAGENZGLASTRÄGER
SUPPORT DE TUBES À ESSAI

(30) Priority: 11.05.2015 EP 15167148
(43) Date of publication of application: 21.03.2018
(73) Proprietor: Roche Diagnostics GmbH, 68305 Mannheim (DE); F. Hoffmann-La Roche AG, 4070 Basel (CH)
(72) Inventor: MALINOWSKI, Michal, 74321 Bietigheim-Bissingen (DE)
(74) Representative: Patentanwälte Ruff, Wilhelm, Beier, Dauster & Partner mbB
(86) International application number: PCT/EP2016/059588
(87) International publication number: WO 2016/180648

(56) References cited:
- WO-A1-2014/138533
- GB-A- 191 111 486
- US-A- 5 224 585
- US-A- 5 350 564
- US-A- 5 651 941
- US-A- 5 720 377
- US-A1- 2013 027 185

## Description

### TECHNICAL FIELD

The invention relates to a test tube carrier for transporting test tubes in a laboratory automation system. The invention further relates to a laboratory distribution system having a number of test tube carriers, and a laboratory automation system comprising a laboratory distribution system.

A laboratory automation system comprises a number of pre-analytical, analytical and/or post-analytical stations, in which samples, for example blood, saliva, swab and other specimens taken from the human body, are processed. It is generally known to provide test tubes containing the samples. The test tubes are also referred to as sample tubes.

Several test tubes can be placed in so-called racks for a handling. In an alternative distribution system, test tubes are place in an upright or vertical position in so called test tube carriers or pucks having a retaining area for retaining test tubes. Test tube carriers are disclosed among others in US 5,651,941, US 5,350,564, US 2013/0027185, US 5,224,585, US 5,720,377, US 6,274,092 B1, US 6,971,506 B2, US 7,485,264 B2, US 8,147,778 B2 and EP 0 916 406 A2.

Generally, in laboratory automation systems different kinds of test tubes, in particular test tubes of different diameter are handled. It is further known to control the transport of the test tubes and/or a treatment of the sample contained in the test tube by means of a bar code provided on an outside surface of the test tube. For this purpose, the bar code should be readable during the transport and/or at all handling stations without the necessity to remove the test tube from the carrier.

In other technical fields, packing boxes for bottles and jars, which fully enclose the packing objects, are known. For example GB 11486 shows a packing box with bent resilient strips.

### SUMMARY OF THE INVENTION

It is an object of the present invention to provide a test tube carrier allowing for a secure support of different types of test tubes without hindering a readability of the bar code or any other type of identification code provided on an outside of the tube. It is a further object of the present invention to provide a laboratory distribution system and a laboratory automation system comprising a distribution system having a number of test tube carriers.

This object is solved by the test tube carrier with the features of claim 1. Preferred embodiments are defined in the dependent claims.

According to a first aspect of the invention, a test tube carrier for transporting test tubes in a laboratory automation system comprising a base body; and at least three centering fingers attached to the base body is provided, wherein the centering fingers are distributed about a central axis, wherein each centering finger comprises an elongate, bent resilient element and a strut having a higher stiffness than the resilient element, wherein the struts extend in parallel to the central axis, and wherein a first end of the associated resilient element is fixedly attached to the strut at an upper position and a second end of the resilient element contacts the strut at a lower position between the base body and the upper position when a test tube is inserted between the centering fingers and in the absence of a test tube, wherein the resilient element is provided with a contact portion between the first end and the second end, which contact portion protrudes towards the central axis, and wherein the resilient elements are adapted for a resilient deformation displacing the contact portion, while it stays parallel to the central axis (A), towards or away from an associated strut for receiving test tubes of different diameters.

The base body preferably is adapted to a distribution system allowing the test tube carrier to be moved between different stations, for example by means of a conveyer belt, an assigned drive motor and/or a system as described in WO 2013/064656 A1 using a magnetically active device assigned to the carrier.

The resilient elements are attached with a first end to the struts at an upper position. In one embodiment, the upper position coincides to the upper end of the struts. In other embodiments, the struts extend beyond the upper position. The second end of the resilient element contacts the associated strut at a position that is lower than the upper position. The second end contacts the associated strut in case the test tube carrier is empty as well as after receiving a test tube between the centering fingers.

When receiving a test tube between the centering fingers, the resilient elements are deformed and the test tubes are aligned with the central axis and clamped by the restoring forces. In use, different types of test tubes, in particular test tubes of different diameters are transported by means of the test tube carrier. The resilient elements allow for a compensation of different sizes. The struts having a higher stiffness than the resilient elements are not deformed when receiving a test tube and prevent a permanent deformation of the centering fingers radially outwards. The resilient elements are supported at the stiff struts at both ends allowing for a reliable guiding and alignment of the test tube when inserting the test tube as well as for a reliable restoration after removal of the test tube. A reliable restoration is ensured even when holding test tubes having a larger diameter. Hence, a subsequent test tube having a smaller diameter can be retained without play.

The centering fingers preferably are evenly distributed about a circumference of a retaining area. The bar code or other identification means provided at the outside of the tube remain readable by humans or machines. The centering fingers, in particular the resilient elements of the centering fingers of one test tube carrier in one embodiment differ in design. In preferred embodiments, all centering fingers are identical in design within tolerances and the centering fingers are evenly distributed in order to ensure a reliable centering of the test tubes.

The resilient elements comprise a contact portion between the first end and the second end, wherein the resilient elements are adapted for a resilient deformation displacing the contact portion in parallel towards or away from an associated strut for receiving test tubes of different diameters. When displacing the contact portions in parallel towards or away from an associated strut, the effective contact portion in contact with received test tubes is at least essentially the same for different test tubes of different diameters.

The resilient elements are formed such that a contact portion of the resilient element between the first and the second end protrudes towards the central axis. The contact portion is adapted for contacting a received test tube along an interrupted or uninterrupted contact line of a defined length extending in parallel to the central axis. In the context of the application, a contact line is defined as a contact area comprising at least two distinct contact points. It will be understood by the person skilled in the art, that the terms "line" and "point" are not to be interpreted in a strict geometrical sense. Rather, a contact area of two bodies being in point contact will be in the form of a small ellipsoid. The contact portion for example is a planar contact portion extending in parallel to the central axis and contacting a test tube having a circular cross section along a contact line. In other embodiments, a contact portion having a curved surface with a curvature of opposite sign than the received test tube is provided. The defined length of the interrupted or uninterrupted contact line in particular embodiments is at least between 1% and 100% of the length of the associated strut, in particular between 40% and 90%, more particular between 60% and 80%. In one embodiment, the contact portion comprises two or more distinct contact areas, which are offset to one another in the direction of the central axis, wherein a received test tube is in point contact or in line contact with each of the contact areas. In particular embodiments, the contact portion comprises one uninterrupted planar or curved contact area extending in parallel to the central axis.

The resilient elements are adapted for a resilient deformation displacing the contact portion towards or away from an associated strut such that received test tubes of different sizes are contacted at said contact potion along said interrupted or uninterrupted contact line of said defined length in parallel to the central axis. For a parallel displacement of the contact portion, a first pivot leg is arranged between the contact portion and the first end and a second pivot leg is arranged between the contact portion and the second end, wherein the contact portion is coupled to the pivot legs via hinges, in particular via flexure hinges. When displacing the contact portion without altering the defined length of the interrupted or uninterrupted contact line, an overall contact region in which a received test tube contacts the resilient element is independent of the diameter of the test tube. In the context of the application, a flexure hinge is defined as a thinned out or otherwise processed part of material connecting two bodies, i.e. the contact portion and the pivot leg, made of the same material.

In one embodiment, the second end of at least one of the resilient elements is in sliding contact with the associated strut at the lower position. Depending on the shape of the resilient element, when receiving a test tube, the second end of the resilient element slides upwards or downwards along the strut.

In alternative or in addition, at least one of the resilient elements is fixedly attached to the associated strut at the lower position. When attaching the resilient elements at both ends to the strut, guiding of the test tubes upon an insertion between the centering fingers is enhanced.

The material of the elongate, bent resilient element is chosen suitable for allowing repeatable deformation and sufficient restoration forces. In one embodiment, the resilient element is in the form of a wire.

In preferred embodiments, the resilient elements are in the form of resilient metal band. Suitable materials are metals such as stainless steel, brass, bronze, spring steel or other similar resilient metals. The resilient metal band is bent to contact with its two ends the strut and to protrude from the strut towards the central axis. A portion of the metal band functions as the contact portion, wherein said portion in particular embodiments extends in parallel to the central axis.

In preferred embodiments, at least one, preferably all of the resilient metal bands is/are bent to form an at least essentially U-shaped member having a base extending in parallel to the central axis for contacting the received test tube. The U-shaped member has two legs and the base arranged between the legs, so that the resilient element and the strut form a trapezoid, in preferred embodiments a parallelogram. The base, the first leg and the second leg function as the contact portion, the first pivot leg and the second pivot leg, respectively. Hinges between the contact portion and the first and the second leg in one embodiment are formed by bending or folding the resilient metal band. In addition, in one embodiment the metal band is thinned out in the region of bends or folds for forming flexure hinges. When inserting the test tube, an angle between the legs and the base as well as between the legs and the strut will change and the height of the trapezoid or parallelogram perpendicular to the strut is decreased. In case both legs are fixedly attached to the strut, the legs are swiveled in the same angular direction. In case the second end is in sliding contact, embodiments are conceivable, in which the legs are swiveled in opposite directions upon receiving the test tube.

In preferred embodiments, the U-shaped member comprises a first leg attached to the upper of the associated strut, wherein the strut and the first leg form an acute angle. In other words, the first leg extends from the strut toward the central axis and towards the base body. When arranging the first leg at an acute angle, the first legs form an insertion aid for the test tubes causing pre-alignment of the test tubes with the central axis.

As mentioned above, the legs, the base and the strut form a trapezoid. In preferred embodiments, the U-shaped member comprises a second leg extending in parallel to the first leg. In other words, the legs, the base and the strut form a parallelogram, wherein both legs are swiveled towards the strut upon the insertion of a test tube.

In one embodiment, the base of the U-shaped member is bent to form a contact portion with at least two distinct contact areas. Thereby, a total area of a contact portion between the test tube and the base is decreased.

In one embodiment, the test tubes are placed on a flat base body and retained only by means of the centering fingers. In preferred embodiments, the base body has a recess, in particular a chamfered recess adapted for accommodating a bottom of a test tube. The size or depth of the recess and an orientation of the walls of the recess are chosen to allow for an accommodation of different types of test tubes without hindering a readability of the bar code or any other type of identification code provided on an outside of the test tube.

In one embodiment, the struts are fixedly attached to the base body, in particular soldered, welded, or clued to the base body. In preferred embodiments, at least one of the struts is releasably attached to base body. Hence, the central fingers can be replaced if worn-out, without the necessity to replace the base body. In particular, in preferred embodiments, a plug-in connection is provided, wherein the struts are inserted into receiving openings extending in the axial direction of the struts. The ends of the struts inserted into the receiving openings and the receiving openings in one embodiment do not have rotation symmetry to ensure an insertion of the struts with a suitable orientation.

According to a second aspect, a laboratory distribution system is provided having a number of test tube carriers. The laboratory distribution system in one embodiment comprises a transport device with a transport plane adapted to carry said number of test tube carriers, wherein the carriers each comprise at least one magnetically active device and wherein the transport device comprises a number of electro-magnetic actuators, said electromagnetic actuators being stationary arranged below said transport plane and being adapted to move a test tube carrier placed on top of said transport plane by applying a magnetic force to said test tube carrier. However, the invention is not limited to such a laboratory distribution system. In other embodiments, for example a conveyer belt or guiding rails are provided for moving the test tube carriers. In still another embodiment, each test tube carrier is provided with a drive motor.

According to a third aspect, a laboratory automation system with a number of pre-analytical, analytical and/or post-analytical stations, and with a distribution system having a number of test tube carriers is provided.

### BRIEF DESCRIPTION OF THE DRAWINGS

- Fig. 1:: A top view of an embodiment of a test tube carrier.
- Fig. 2:: A sectional view of the test tube carrier of Fig. 1 along a line II-II.
- Fig. 3:: A detail III of Fig. 2.
- Fig. 4:: A detail of a second embodiment of a test tube carrier similar to Fig. 3.
- Fig. 5:: A sectional view of a third embodiment of a test tube carrier similar to Fig. 2.
- Fig. 6:: A perspective view of a laboratory distribution system comprising a number of test tube carriers.

### DETAILED DESCRIPTION

In the following, embodiments of the invention will be described in detail with reference to the drawings. Wherever possible, the same reference numbers are used throughout the drawings to refer to the same or like parts.

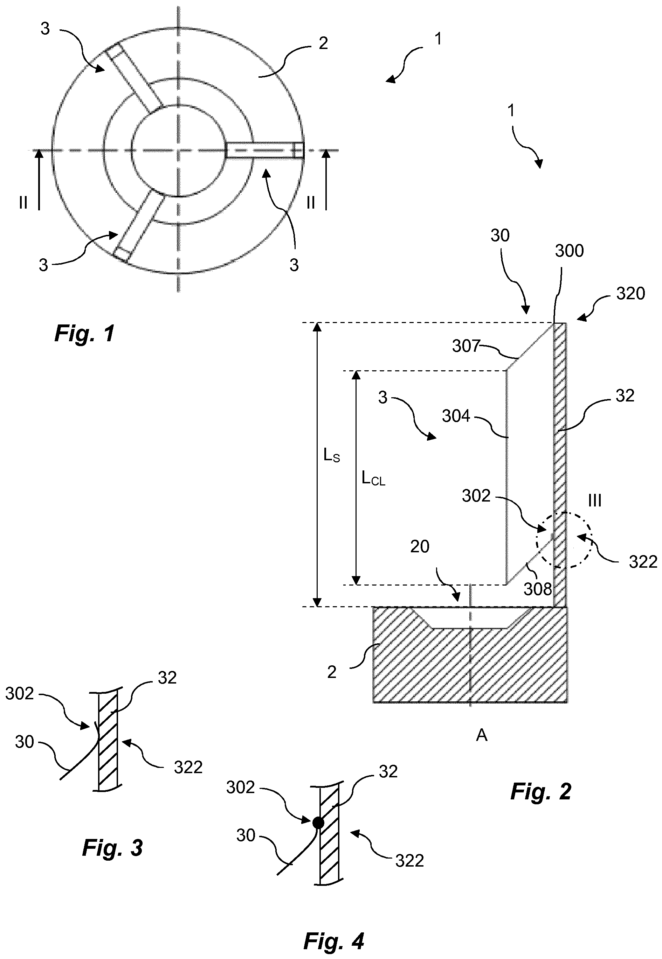

Figs. 1 and 2 show a top view and a sectional view of a first embodiment of a test tube carrier 1 for transporting test tubes (not shown in Figs. 1 and 2) in a laboratory distribution system of a laboratory automation system.

The test tube carrier 1 comprises a base body 2 and three centering fingers 3 attached to the base body 2. The three centering fingers 3 are evenly distributed about a central axis A. In other embodiments more than three centering fingers 3 are provided, for example four or five centering fingers 3. In the embodiment shown, the base body 2 has a circular cylindrical shape, which is concentric to the central axis A. However, this shape is to be understood only as an example, other shapes are conceivable, wherein the base body is adapted to the requirements of a laboratory distribution system.

The base body 2 has a chamfered recess 20, which is concentric to the central axis A and adapted for accommodating a bottom of a test tube.

The centering fingers 3 each comprise an elongate, bent resilient element 30 and a strut 32, wherein due to material differences and/or due to a shape, the strut 32 has a higher stiffness than the resilient elements 30.

The three struts 32 each extend in parallel to the central axis A. A connection of the struts 32 to the base body 2 is depicted only diagrammatically. A suitable connection can be chosen by the person skilled in the art, wherein preferably the struts 32 are releasably attached to the base body 2 allowing a replacement of the struts 32 in case the centering fingers 3 are worn-out.

In the embodiment shown, the resilient elements 30 are in the form of bent resilient metal bands, in particular bent spring steel bands. A first end 300 of the resilient metal band is fixedly attached to the strut 32 at an upper position 320, which upper position 320 coincides with the upper end of the strut 32. A second end 302 of the resilient metal band contacts the strut 32 at a lower position 322, which lower position 322 is situated between the base body 2 and the upper position 320.

The struts 32 are arranged outside of a retaining area for the test tubes and the resilient elements 30, more particular contact portion of the resilient elements 30 provided between the first end 300 and the second end 302, protrude from the struts 32 towards the central axis A and into the retaining area for the test tubes.

In the embodiment shown, the resilient metal bands provided as the resilient elements 30 are bent to form an at least essentially U-shaped member having base 304, a first leg 307 and a second leg 308, each.

The base 304 of each of the U-shaped members functions as the contact portion. It extends in parallel to the central axis A for contacting the received test tube (not shown) along a contact line. The first legs 307 of each of the U-shaped members is attached to the strut 32 at the upper position 320, wherein the strut 32 and the first leg 307 form an acute angle. Thereby, the first legs 307 function as an insertion aid for a pre-alignment of the test tubes.

In the embodiment shown, the second leg 308 extends at least essentially in parallel to the first leg 307, wherein a free end of the second leg 308 contacts the strut 32 at the lower position 322.

When inserting a test tube (not shown in Fig.1 and 2) between the centering fingers 3, the resilient elements are resiliently deformed for receiving test tubes of different diameters. More particular, the first leg 300 and the second leg 302 are pivoted towards the associated strut 32 for displacing the base 304 in parallel towards the associated strut 32. Thus, the base 304 functioning as a contact portion contacts received test tubes of different diameters along a contact line. The length L_{CL} of the contact line is the same for test tubes of different diameter. In the embodiment shown in Fig. 2, the length L_{CL} of the uninterrupted contact line is between 70% and 80% of the length L_{S} of the associated strut 32. After removal of the test tube, the restoration force of the resilient element 30 will cause the first leg 300 and the second leg 302 to be pivoted away from the associated strut 32 for displacing the base 304 in parallel away from the associated strut 32.

Fig. 3 shows a detail III of Fig. 2. As can be seen in Fig. 3, in the embodiment shown in Figs. 1 to 3, the second ends 302 of the resilient elements 30, more particular of the second legs 308, are in sliding contact with the associated strut 32 at the lower position 322.

Fig. 4 shows a detail of a second embodiment of a test tube carrier similar to Fig. 3. The test tube carrier according to the second embodiment in large parts corresponds to test tube carrier shown in Figs. 1 to 3. In contrast to the embodiment shown in Fig. 3, the second end 302 of the resilient element 30 shown, preferably of all resilient elements, are fixedly attached to the associated strut 32 at the lower position 322.

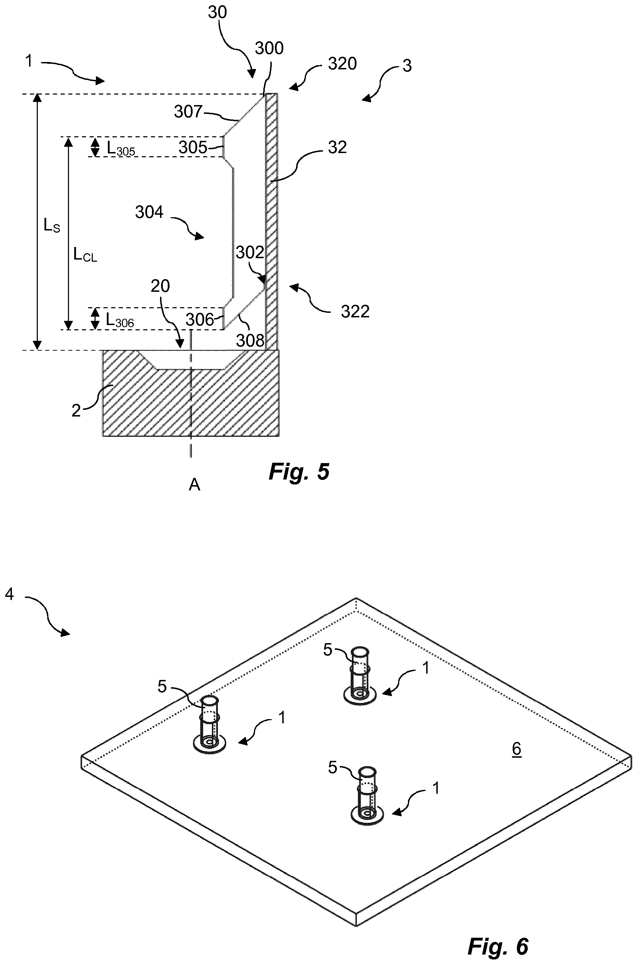

Fig. 5 shows a sectional view of a third embodiment of a test tube carrier 1 similar to Fig. 2. The test tube carrier 1 according to the second embodiment in large parts corresponds to test tube carrier 1 shown in Figs. 1 to 3 or 4 and for a detailed description, reference is made to the above description. In contrast to the embodiments described above, the base 304 of the U-shaped member is bent to form a contact portion with at least two distinct contact areas 305, 306, contacting the received test tube (not shown) at two distinct areas. A test tube inserted between the centering fingers 3 shown in Fig. 5 will contact the contact portion along an interrupted contact line, which extends across both contact areas 305, 306. In the embodiment shown in Fig. 5, the length L₃₀₅, L₃₀₆ of each the two distinct contact areas is between 5% and 10% of the length L_{S} of the associated strut 32. The overall length L_{CL} of the interrupted contact line is between 70% and 80% of the length L_{S} of the associated strut 32.

Fig. 6 shows a perspective view of a laboratory distribution system 4 comprising a number of test tube carriers 1 and a transport device with a transport plane 6 adapted to carry the number of test tube carriers 1. Test tubes 5 are received by the test tube carriers 1 and moved over the transport plane 6 to a desired destination.

## Claims

1. Test tube carrier for transporting test tubes (5) in a laboratory automation system comprising:
- a base body (2) and
- at least three centering fingers (3) attached to the base body (2), wherein the centering fingers (3) are distributed about a central axis (A), and wherein each centering finger (3) comprises an elongate, bent resilient element (30) and a strut (32) having a higher stiffness than the resilient element (30), which strut (32) extends in parallel to the central axis (A),
wherein a first end (300) of the associated resilient element (30) is fixedly attached to the strut (32) at an upper position (320),
**characterized in that** a second end (302) of the resilient element (30) contacts the strut (32) at a lower position between the base body (2) and the upper position (320) when a test tube (5) is inserted between the centering fingers (3) and in the absence of a test tube (5), **in that** the resilient element (30) is provided with a contact portion between the first end (300) and the second end (302), which contact portion protrudes towards the central axis (A), and is adapted for contacting a received test tube (5) along an interrupted or uninterrupted contact line of a defined length extending in parallel to the central axis (A), and **in that** the resilient elements (30) are adapted for a resilient deformation displacing the contact portion, while it stays parallel to the central axis (A), towards or away from an associated strut for receiving test tubes of different diameters, wherein for a parallel displacement each resilient element (30) is provided with a first pivot leg arranged between the contact portion and the first end (300) and a second pivot leg arranged between the contact portion and the second end wherein the contact portion is coupled to the pivot legs via hinge.

2. Test tube carrier according to claim 1, **characterized in that** the contact portion is coupled to the pivot legs via flexure hinges.

3. Test tube carrier according to any one of claims 1 or 2, **characterized in that** the second end (302) of at least one of the resilient elements (30) is in sliding contact with the associated strut (32) at the lower position (322).

4. Test tube carrier according to any one of claims 1 or 2, **characterized in that** the second end (302) of at least one of the resilient elements (30) is fixedly attached to the associated strut (32) at the lower position (322).

5. Test tube carrier according to any one of claims 1 to 4, **characterized in that** the resilient elements (30) are in the form of resilient metal band.

6. Test tube carrier according to claim 5, **characterized in that** at least one of the resilient metal bands (30) is bent to form an at least essentially U-shaped member having base (304) extending in parallel to the central axis (A) for contacting the received test tube (5).

7. Test tube carrier according to claim 6, **characterized in that** the U-shaped member comprises a first leg (307) attached to the upper of the associated strut, wherein the strut and the first leg form an acute angle.

8. Test tube carrier according to claim 7, **characterized in that** the U-shaped member comprises a second leg (308) extending in parallel to the first leg (307).

9. Test tube carrier according to claim 6, 7 or 8, **characterized in that** the base (304) of the U-shaped member is bent to form a contact portion with at least two distinct contact areas (305, 306).

10. Test tube carrier according to any one of claims 1 to 9, **characterized in that** the base body (2) has a recess (20) adapted for accommodating a bottom of a test tube (5).

11. Test tube carrier according to any one of claims 1 to 10, **characterized in that** at least one of the struts (32) is releasably attached to the base body (2).

12. Laboratory distribution system having a number of test tube carriers (1) according to any one of claims 1 to 11.

13. Laboratory automation system with a number of pre-analytical, analytical and/or post-analytical stations, and with a distribution system (4) according to claim 12.

## Patentansprüche

1. Probenröhrchenträger zum Transportieren von Probenröhrchen (5) in einem Laborautomatisierungssystem, umfassend:
- einen Grundkörper (2) und
- mindestens drei Zentrierfinger (3), die am Grundkörper (2) angebracht sind, wobei die Zentrierfinger (3) um eine Mittelachse (A) verteilt sind, und wobei jeder Zentrierfinger (3) ein langgestrecktes, abgewinkeltes elastisches Element (30) sowie eine Strebe (32) mit einer höheren Steifigkeit als das elastische Element (30) umfasst, wobei die Strebe (32) sich parallel zur Mittelachse (A) erstreckt,
wobei ein erstes Ende (300) des zugeordneten elastischen Elements (30) in einer oberen Position (320) fest an der Strebe (32) angebracht ist,
**dadurch gekennzeichnet, dass**
ein zweites Ende (302) des elastischen Elements (30) die Strebe (32) an einer unteren Position zwischen dem Grundkörper (2) und der oberen Position (320) kontaktiert, wenn ein Probenröhrchen (5) zwischen die Zentrierfinger (3) eingesetzt ist und in Abwesenheit eines Probenröhrchens (5), dass das elastische Element (30) mit einem Kontaktabschnitt zwischen dem ersten Ende (300) und dem zweiten Ende (302) versehen ist, welcher Kontaktabschnitt zur Mittelachse (A) hin abragt und dazu ausgebildet ist, dass er ein aufgenommenes Probenröhrchen (5) entlang einer unterbrochenen oder ununterbrochenen Kontaktlinie mit einer definierten Länge, die parallel zur Mittelachse (A) verläuft, kontaktiert, und dass die elastischen Elemente (30) dazu ausgebildet sind, in einer elastischen Deformation den Kontaktabschnitt, während er parallel zur Mittelachse (A) bleibt, zu einer zugeordneten Strebe hin oder davon weg zu verlagern, um Probenröhrchen unterschiedlicher Durchmesser aufzunehmen, wobei für eine parallele Verlagerung jedes elastische Element (30) mit einem ersten Ausleger, der zwischen dem Kontaktabschnitt und dem ersten Ende (300) angeordnet ist, und einem zweiten Ausleger, der zwischen dem Kontaktabschnitt und dem zweiten Ende (302) angeordnet ist, versehen ist, wobei der Kontaktabschnitt über ein Scharnier mit den Auslegern gekoppelt ist.

2. Probenröhrchenträger nach Anspruch 1, **dadurch gekennzeichnet, dass** der Kontaktabschnitt über Festkörpergelenke mit den Auslegern gekoppelt ist.

3. Probenröhrchenträger nach einem der Ansprüche 1 oder 2, **dadurch gekennzeichnet, dass** das zweite Ende (302) mindestens eines elastischen Elements (30) mit der zugeordneten Strebe (32) an der unteren Position (322) in Gleitkontakt steht.

4. Probenröhrchenträger nach einem der Ansprüche 1 oder 2, **dadurch gekennzeichnet, dass** das zweite Ende (302) mindestens eines elastischen Elements (30) an der zugeordneten Strebe (32) an der unteren Position (322) fest angebracht ist.

5. Probenröhrchenträger nach einem der Ansprüche 1 bis 4, **dadurch gekennzeichnet, dass** die elastischen Elemente (30) in Form von elastischen Metallstreifen ausgebildet sind.

6. Probenröhrchenträger nach Anspruch 5, **dadurch gekennzeichnet, dass** mindestens einer der elastischen Metallstreifen (30) zu einem im Wesentlichen U-förmigen Glied mit einer Basis (304) gebogen ist, die sich zum Kontaktieren des aufgenommenen Probenröhrchens (5) parallel zur Mittelachse (A) erstreckt.

7. Probenröhrchenträger nach Anspruch 6, **dadurch gekennzeichnet, dass** das U-förmige Glied einen ersten Schenkel (307) umfasst, der am oberen Bereich der zugeordneten Strebe angebracht ist, wobei die Strebe und der erste Schenkel einen spitzen Winkel einschließen.

8. Probenröhrchenträger nach Anspruch 7, **dadurch gekennzeichnet, dass** das U-förmige Glied einen zweiten Schenkel (308) umfasst, der sich parallel zum ersten Schenkel (307) erstreckt.

9. Probenröhrchenträger nach Anspruch 6, 7 oder 8, **dadurch gekennzeichnet, dass** die Basis (304) des U-förmigen Glieds zur Ausbildung eines Kontaktabschnitts mit mindestens zwei einzelnen Kontaktbereichen (305, 306) gebogen ist.

10. Probenröhrchenträger nach einem der Ansprüche 1 bis 9, **dadurch gekennzeichnet, dass** der Grundkörper (2) eine Ausnehmung (20) aufweist, die dazu ausgebildet ist, dass sie einen Boden eines Probenröhrchens (5) aufnimmt.

11. Probenröhrchenträger nach einem der Ansprüche 1 bis 10, **dadurch gekennzeichnet, dass** mindestens eine der Streben (32) lösbar am Grundkörper (2) angebracht ist.

12. Laborprobenverteilungssystem mit einer Anzahl an Probenröhrchenträgern (1) nach einem der Ansprüche 1 bis 11.

13. Laborautomatisierungssystem mit einer Anzahl an pre-analytischen, analytischen und/oder post-analytischen Stationen und mit einem Verteilungssystem (4) nach Anspruch 12.

## Revendications

1. Support de tubes à essai pour transporter des tubes à essai (5) dans un système d'automatisation de laboratoire comprenant :
- un corps de base (2) et
- au moins trois doigts de centrage (3) fixés au corps de base (2), les doigts de centrage (3) étant répartis autour d'un axe central (A), et chaque doigt de centrage (3) comprenant un élément résilient courbe allongé (30) et une entretoise (32) ayant une rigidité plus grande que l'élément résilient (30), laquelle entretoise (32) s'étend parallèlement à l'axe central (A),
dans lequel une première extrémité (300) de l'élément résilient (30) associé est fixée à demeure à l'entretoise (32) au niveau d'une position supérieure (320),
**caractérisé en ce qu'**une seconde extrémité (302) de l'élément résilient (30) vient au contact de l'entretoise (32) au niveau d'une position inférieure entre le corps de base (2) et la position supérieure (320) lorsqu'un tube à essai (5) est introduit entre les doigts de centrage (3) et en l'absence de tube à essai (5), **en ce que** l'élément résilient (30) est doté d'une partie de contact entre la première extrémité (300) et la seconde extrémité (302), laquelle partie de contact dépasse en direction de l'axe central (A), et est conçue pour entrer en contact avec un tube à essai (5) reçu le long d'une ligne de contact interrompue ou ininterrompue d'une longueur définie s'étendant parallèlement à l'axe central (A), et **en ce que** les éléments résilients (30) sont conçus pour une déformation résiliente déplaçant la partie de contact, pendant qu'elle reste parallèle à l'axe central (A), en direction ou à distance d'une entretoise associée pour recevoir des tubes à essai de différents diamètres, dans lequel, pour un déplacement parallèle, chaque élément résilient (30) est pourvu d'une première jambe de pivot disposée entre la partie de contact et la première extrémité (300) et d'une seconde jambe de pivot disposée entre la partie de contact et la seconde extrémité (302), la partie de contact étant accouplée aux jambes de pivot par l'intermédiaire d'une charnière.

2. Support de tubes à essai selon la revendication 1, **caractérisé en ce que** la partie de contact est accouplée aux jambes de pivot par l'intermédiaire de charnières de flexion.

3. Support de tubes à essai selon l'une quelconque des revendications 1 et 2, **caractérisé en ce que** la seconde extrémité (302) d'au moins un des éléments résilients (30) est en contact coulissant avec l'entretoise (32) associée au niveau de la position inférieure (322).

4. Support de tubes à essai selon l'une quelconque des revendications 1 et 2, **caractérisé en ce que** la seconde extrémité (302) d'au moins un des éléments résilients (30) est fixée à demeure à l'entretoise (32) associée au niveau de la position inférieure (322).

5. Support de tubes à essai selon l'une quelconque des revendications 1 à 4, **caractérisé en ce que** les éléments résilients (30) ont la forme d'une bande métallique résiliente.

6. Support de tubes à essai selon la revendication 5, **caractérisé en ce qu'**au moins une des bandes métalliques résilientes (30) est courbée pour former un élément au moins pratiquement en forme de U possédant une base (304) s'étendant parallèlement à l'axe central (A) pour entrer en contact avec le tube à essai (5) reçu.

7. Support de tubes à essai selon la revendication 6, **caractérisé en ce que** l'élément en forme de U comprend une première patte (307) fixée à la partie supérieure de l'entretoise associée, dans lequel l'entretoise et la première patte forment un angle aigu.

8. Support de tubes à essai selon la revendication 7, **caractérisé en ce que** l'élément en forme de U comprend une seconde patte (308) s'étendant parallèlement à la première patte (307).

9. Support de tubes à essai selon la revendication 6, 7 ou 8, **caractérisé en ce que** la base (304) de l'élément en forme de U est courbée pour former une partie de contact dotée d'au moins deux zones de contact distinctes (305, 306).

10. Support de tubes à essai selon l'une quelconque des revendications 1 à 9, **caractérisé en ce que** le corps de base (2) comporte un renfoncement (20) conçu pour accueillir un fond d'un tube à essai (5).

11. Support de tubes à essai selon l'une quelconque des revendications 1 à 10, **caractérisé en ce qu'**au moins une des entretoises (32) est fixée de manière libérable au corps de base (2).

12. Système de distribution de laboratoire possédant un certain nombre de supports (1) de tubes à essai selon l'une quelconque des revendications 1 à 11.

13. Système d'automatisation de laboratoire équipé d'un certain nombre de stations préanalytiques, analytiques et/ou postanalytiques, et d'un système de distribution (4) selon la revendication 12.
